# EUROPEAN PATENT SPECIFICATION

(11) **EP 2 987 648 B1**
(45) Date of publication and mention of the grant of the patent: **10.05.2017**
(21) Application number: 15180110.7
(22) Date of filing: 07.08.2015
(51) Int. Cl.: B60C 1/00, C08K 5/098, C08L 7/00, C08L 9/00, B60C 9/00

(54) **RUBBER COMPOSITION CONTAINING TIN CARBOXYLATE SALT**
GUMMIZUSAMMENSETZUNG MIT ZINN-CARBOXYLAT-SALZ
COMPOSITION DE CAOUTCHOUC CONTENANT UN SEL DE CARBOXYLATE D'ÉTAIN

(30) Priority: 20.08.2014 US 201414463745
(43) Date of publication of application: 24.02.2016
(73) Proprietor: The Goodyear Tire & Rubber Company, Akron, Ohio 44316 (US)
(72) Inventor: FRANK, Uwe Ernst, 54329 Konz (DE); KANZ, Carlo, 8249 Mamer (LU); WEYDERT, Marc, 8020 Strassen (LU); BODE, Matthias, 63584 Gruendau (DE); JUNG, Manfred Josef, 66629 Freisen (DE)
(74) Representative: Kutsch, Bernd

(56) References cited:
- EP-A2- 1 148 091
- US-A- 3 738 948
- US-A1- 2005 159 554
- US-B2- 8 258 224

## Description

### Background of the Invention

A tire is a composite of several components each serving a specific and unique function yet all synergistically functioning to produce the desired performance. In several tire components, an in-situ resin may be included in a rubber composition to impart desirable properties to the rubber composition, including hardness, tear strength, and adhesion to reinforcement. Alternatively or in combination with resins, cobalt salts may be used to promote adhesion of the rubber to steel cords. Unfortunately, cobalt is undesirable from an environmental standpoint. Therefore, there exists a need for cobalt replacement without sacrificing the beneficial properties resulting from its use.

US-A-3,738,948 describes a rubber composition comprising a reinforcing fiber which may comprise polyester fibers in combination with wire. The rubber composition may comprise metals soaps such as tin (II) stearate.

US-B2-8,258,224 describes a rubber composition for a tire comprising epoxidized natural rubber and a fatty acid metal salt such as tin stearate.

EP-A-1 148 091 describes a silica reinforced rubber composition and an article with a component thereof. In order to improve the reinforcing effect of the silica, the rubber composition may comprise tin (II) 2-ethylhexanoate.

### Summary of the Invention

The present invention is directed to an article of manufacture in accordance with claim 1.

### Detailed Disclosure of Example Embodiments of the Invention

There is disclosed an article of manufacture having a wire-reinforced component comprising
(A) a metallic wire; and
(B) a rubber composition contacting the wire, the rubber composition comprising
   (1) a diene based elastomer; and
   (2) a tin acetate or tin 2-ethylhexanoate.

The present invention relates to an article of manufacture, specifically a pneumatic tire for purposes of this description, but is not limited to a tire. Pneumatic tire means a laminated mechanical device of generally toroidal shape (usually an open torus) having beads and a tread and made of rubber, chemicals, fabric and steel or other materials. The present invention relates to both bias and radial-ply tires. Preferably, the present invention is a radial-ply tire. Radial-ply tire means a belted or circumferentially-restricted pneumatic tire in which the carcass ply cords which extend from bead to bead are laid at cord angles between 65° and 90° with respect to the equatorial plane of the tire.

The rubber composition for use in the tire component may contain a natural or synthetic diene derived rubber. Representative of the rubbers include medium vinyl polybutadiene, styrene-butadiene rubber, synthetic cis-1,4-polyisoprene, synthetic 3,4-polyisoprene, natural rubber, cis-polybutadiene, styrene-isoprene rubber, styrene-isoprene-butadiene rubber, acrylonitrile-butadiene rubber, carboxylated acrylonitrile-butadiene rubber and mixtures thereof. Preferably, the rubber is natural rubber, styrene-butadiene rubber or cis-polybutadiene.

The component of the tire of the present invention contains tin carboxylate salt as an adhesion promoter. The adhesion promoter is useful particularly in an application where a rubber composition must adhere to a metal surface. Such an application occurs in a pneumatic tire, for instance, wherein a rubber composition reinforced with a steel cord must have sufficient adhesion of the rubber composition to the steel cord.

In one embodiment, tin 2-ethylhexanoate is used.

In one embodiment, the amount of tin acetate or tin 2-ethylhexanoate in the rubber composition ranges from 0.2 to 2 phr. In one embodiment, the amount of tin acetate or tin 2-ethylhexanoate in the rubber composition ranges from 0.5 to 1.5 phr. In one embodiment, the amount of tin acetate or tin 2-ethylhexanoate in the rubber composition ranges from 0.5 to 1 phr.

In-situ resins may be used in the rubber composition and involve the reaction of a methylene acceptor and a methylene donor.

In one embodiment, the rubber composition contains from 2 to 35 phr of the reaction product of a methylene acceptor and a methylene donor. In one embodiment, from 5 to 15 phr of the reaction product is used.

The term "methylene acceptor" is known to those skilled in the art and is used to describe the reactant to which the methylene donor reacts to form what is believed to be a methylol monomer. The condensation of the methylol monomer by the formation of a methylene bridge produces the resin. The initial reaction that contributes the moiety that later forms into the methylene bridge is the methylene donor wherein the other reactant is the methylene acceptor. Representative compounds which may be used as a methylene acceptor include but are not limited to resorcinol, resorcinolic derivatives, monohydric phenols and their derivatives, dihydric phenols and their derivatives, polyhydric phenols and their derivatives, unmodified phenol novolak resins, modified phenol novolak resin, phenol formaldehyde resin, resorcinol novolak resins and mixtures thereof. Examples of methylene acceptors include but are not limited to those disclosed in US-B-6,605,670; US-B-6,541,551; US-B- 6,472,457; US-A- 5,945,500; US-A-5,936,056; US-A-5,688,871; US-A-5,665,799; US-A-5,504,127; US-A-5,405,897; US-A-5,244,725; US-A-5,206,289; US-A-5,194,513; US-A-5,030,692; US-A-4,889,481; US-A-4,605,696; US-A-4,436,853; and US-A-4,092,455. Examples of modified phenol novolak resins include but are not limited to cashew nut oil modified phenol novolak resin, tall oil modified phenol novolak resin and alkyl modified phenol novolak resin. In one embodiment, the methylene acceptor is a reactive phenol-formaldehyde resin. Suitable reactive phenol-formaldehyde resins include SMD 30207 from Schenectedy Chemicals.

Other examples of methylene acceptors include activated phenols by ring substitution and a cashew nut oil modified novolak-type phenolic resin. Representative examples of activated phenols by ring substitution include resorcinol, cresols, t-butyl phenols, isopropyl phenols, ethyl phenols and mixtures thereof. Cashew nut oil modified novolak-type phenolic resins are commercially available from Schenectady Chemicals Inc under the designation SP6700. The modification rate of oil based on total novolak-type phenolic resin may range from 10 to 50 percent. For production of the novolak-type phenolic resin modified with cashew nut oil, various processes may be used. For example, phenols such as phenol, cresol and resorcinol may be reacted with aldehydes such as formaldehyde, paraformaldehyde and benzaldehyde using acid catalysts. Examples of acid catalysts include oxalic acid, hydrochloric acid, sulfuric acid and p-toluenesulfonic acid. After the catalytic reaction, the resin is modified with the oil.

The amount of methylene acceptor in the rubber composition may vary. In one embodiment, the amount of methylene acceptor ranges from 1 to 25 phr. In another embodiment, the amount of methylene acceptor ranges from 2 to 20 phr.

In-situ resins are formed in the rubber composition and involve the reaction of a methylene acceptor and a methylene donor. The term "methylene donor" is intended to mean a compound capable of reacting with the methylene acceptor and generate the resin in-situ. Examples of methylene donors which are suitable for use in the present invention include hexamethylenetetramine, hexamethoxymethylmelamine, hexaethoxymethylmelamine, imino-methoxymethylmelamine, imino-isobutoxymethylmelamine, lauryloxymethylpyridinium chloride, ethoxymethylpyridinium chloride trioxan and hexamethoxymethylmelamine. In addition, the methylene donors may be N-substituted oxymethylmelamines, of the general formula: 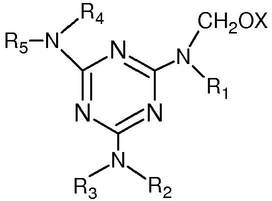 wherein X is hydrogen or an alkyl having from 1 to 8 carbon atoms, R₁, R₂, R₃, R₄ and R₅ are individually selected from the group consisting of hydrogen, an alkyl having from 1 to 8 carbon atoms, the group -CH2OX or their condensation products. Specific methylene donors include hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"-tris(methoxymethyl)melamine and N,N'N"-tributyl-N,N',N"-trimethylol-melamine. The N-methylol derivatives of melamine are prepared by known methods.

The amount of methylene donor that may be present in the rubber composition may vary. In one embodiment, the amount of methylene donor that is present will range from 1 phr to 25 phr. In one embodiment, the amount of methylene donor ranges from 2 phr to 20 phr.

It is readily understood by those having skill in the art that the rubber compositions used in tire components would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The rubber composition may contain various conventional rubber additives. Typical additions of carbon black comprise 10 to 150 parts by weight of diene rubber (phr).

A number of commercially available carbon blacks may be used. Included in the list of carbon blacks are those known under the ASTM designations N299, S315, N326, N330, M332, N339, N343, N347, N351, N358, N375, N539, N550 and N582. Such processing aids may be present and can include, for example, aromatic, naphthenic, and/or paraffinic processing oils. Typical amounts of tackifying resins, such as phenolic tackifiers, range from 1 to 3 phr. Silica, if used, may be used in an amount of 10 to 150 phr, often with a silica coupling agent. Representative silicas may be, for example, hydrated amorphous silicas. Typical amounts of antioxidants comprise 1 to 5 phr. Representative antioxidants may be, for example, diphenyl-p-phenylenediamine, polymerized 1,2-dihydro-2,2,4-trimethylquinoline and others, such as, for example, those disclosed in the Vanderbilt Rubber Handbook (1990), Pages 343 through 362. Typical amounts of antiozonants comprise 1 to 5 phr. Representative antiozonants may be, for example, those disclosed in the Vanderbilt Rubber Handbook (1990), Pages 363 through 367. Typical amounts of fatty acids, if used, which can include stearic acid comprise 0.5 to 3 phr. Typical amounts of tin oxide comprise 2 to 10 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 5 phr, or even, in some circumstances, up to 8 phr, with a range of from 3 to 5 being preferred.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.5 phr. In another embodiment, combinations of two or more accelerators which is generally used in the larger amount (0.5 to 2.0 phr), and a secondary accelerator which is generally used in smaller amounts (0.05 to 0.50 phr) in order to activate and to improve the properties of the vulcanizate. Combinations of these accelerators have been known to produce a synergistic effect of the final properties and are somewhat better than those produced by use of either accelerator alone. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

In one embodiment, the rubber composition excludes cobalt. However, as is known in the art some residual amount of cobalt may be present in mixing equipment and consequently appear in rubber compositions. The rubber composition is then said to be essentially free of cobalt. By essentially free, it is meant that the amount of cobalt, if any, is very low and is present only due to contamination by process equipment and normal handling in the material procurement process. In one embodiment, the amount of cobalt is less than 0.1 phr. In one embodiment, the amount of cobalt is less than 0.05 phr. In one embodiment, the of cobalt is less than 0.01 phr.

The rubber composition may be described as consisting essentially of a diene based elastomer, and a tin carboxylate salt. In this instance, by "consisting essentially of" means that while other typical compounding additives as described herein may be present in the rubber composition, cobalt and cobalt salts are not included as they have a material and undesirable effect on the behavior of the rubber composition in the sense that they have an undesirable environmental effect. Other allowable ingredients in the rubber composition and not excluded by the term "consisting essentially of" include all those previously mentioned herein.

The metallic wire or cord used according to the present invention may be steel, tin-plated steel or brass-plated steel. Preferably, the metallic cord is brass plated steel.

The steel substrate may be derived from those known to those skilled in the art. For example, the steel used for wire may be conventional tire cord rod including AISI grades 1070, 1080, 1090 and 1095. The steel may additionally contain varying levels of carbon and microalloying elements such as Cr, B, Ni and Co.

The term "cord" means one or more of a reinforcing element, formed by one or more filaments or wires which may or may not be twisted or otherwise formed. Therefore, cords using the present invention may comprise from one (monofilament) to multiple filaments. The number of total filaments or wires in the cord may range from 1 to 134. Preferably, the number of filaments or wires per cord ranges from 1 to 49.

The wire or cord may be used in a belt structure, bead or carcass of a tire. "Belt structure" means at least two layers of plies of parallel cords, underlying the tread, unanchored to the bead and having both left and right cord angles in the range from 17 to 27 degrees with respect to the equatorial plane (EP) of the tire. "Carcass" means the tire structure apart from the belt structure, the tread and the undertread but including the beads. The carcass ply includes reinforcing cords embedded in an elastomeric substance and that these components are considered to be a single entry. "Bead" means that part of the tire comprising an annular tensile member wrapped by the carcass ply and shaped, with or without other reinforcement elements such as flippers, chippers, apexes, toe guards, and chafers, to fit the design rim.

The tire can be built, shaped, molded and cured by various methods which will be readily apparent to those having skill in such art.

The prepared tire of this invention is conventionally shaped and cured by methods known to those having skill in such art.

The invention may be better understood by reference to the following examples in which the parts and percentages are by weight unless otherwise indicated.

### Example 1

In this example, the effect of replacing a cobalt salt with a tin (II) carboxylate salt is demonstrated for rubber compounds. Five experimental rubber compounds were prepared in a lab Banbury mixer as indicated in Table 1, with all compounds containing otherwise identical amounts of additives in conventional amounts.

Physical properties of the compounds were evaluated as indicated in Table 2.

**Table 1**

| Sample No. | 1 | 2 | 3 | 4 | 5 |
|---|---|---|---|---|---|
| Sample Type | comp | cont | inv | inv | comp |
| Natural Rubber | 100 | 100 | 100 | 100 | 100 |
| Cobalt Salt¹ | 0.5 | 0 | 0 | 0 | 0.5 |
| Tin Salts² | 0 | 0 | 0.5 | 1 | 0 |

| | | | | | |
|---|---|---|---|---|---|
| ¹Cobalt neodecanoate ²Tin 2-ethylhexanoate | | | | | |

**Table 2**

| Sample No. | 1 | 2 | 3 | 4 | 5 |
|---|---|---|---|---|---|
| Sample Type³ | Comp | Cont | Inv | Inv | Comp |
| Stress-strain ATS (cured 18 minutes at 150°C; test at 23 °C) | | | | | |
| No aging | | | | | |
| Tensile strength (MPa) | 21.8 | 20.4 | 21.7 | 21.2 | 20.6 |
| Elongation at break (%) | 445 | 420 | 462 | 433 | 408 |
| 100% modulus (MPa) | 3.4 | 3.2 | 3.2 | 3.3 | 3.6 |
| 300% modulus (MPa) | 15.6 | 15.5 | 14.8 | 15.7 | 16.3 |
| Rebound, 100°C (%) | 54.1 | 55.4 | 50.8 | 53.2 | 53.6 |

| Aged 7 days at 70 °C in Air | | | | | |
|---|---|---|---|---|---|
| Tensile strength (MPa) | 19.7 | 21.8 | 21.1 | 21.2 | 20.9 |
| Elongation at break (%) | 323 | 370 | 361 | 338 | 329 |
| 100% modulus (MPa) | 5.4 | 4.8 | 5 | 5.6 | 5.7 |
| 300% modulus (MPa) | 20.6 | 19.8 | 19.7 | 21 | 20.9 |
| Rebound, 100°C (%) | 56.6 | 56.7 | 56.6 | 54.8 | 58 |

| Tear strength⁴ (cured 25 minutes at 150 °C; test at 100 °C) | | | | | |
|---|---|---|---|---|---|
| Aged 5 days at 70 C in Air | | | | | |
| Tear strength, N/mm | 11.7 | 15.9 | 7.5 | 3.8 | 4.2 |
| | | | | | |

| Wire Adhesion⁵ (cured 35 minutes at 155°C: test at 23 °C) | | | | | |
|---|---|---|---|---|---|
| No aging, N | 728 | 625 | 590 | 648 | 734 |
| Rubber coverage, % | 95 | 75 | 70 | 80 | 95 |
| Aged 7 days in air at 70 °C, N | 806 | 711 | 710 | 742 | 803 |
| Rubber coverage, % | 100 | 80 | 80 | 90 | 95 |
| Aged 7 days in N₂ at 70 °C, N | 797 | 666 | 679 | 724 | 780 |
| Rubber coverage, % | 100 | 80 | 80 | 85 | 95 |
| | | | | | |

| DeMattia Flex Testing⁶ (cured 18 minutes at 150 °C, test at room temperature) | | | | | |
|---|---|---|---|---|---|
| Cut length at 5 min | 1.77 | 1.93 | 1.67 | 1.80 | 2.07 |
| Cut length at 10 min | 4.37 | 3.93 | 4.17 | 3.33 | 4.53 |
| Cut length at 15 min | 5.97 | 5.37 | 5.37 | 5.00 | 6.37 |
| Cut length at 30 min | 9.63 | 9.13 | 8.03 | 6.87 | 9.33 |
| Cut length at 60 min | 16.33 | 16.67 | 11.83 | 11.10 | 14.2 |
| Cut length at 120 min | fail | fail | 19.67 | 17.23 | fail |

| | | | | | |
|---|---|---|---|---|---|
| ³ Cont = control; comp = comparative; inv = inventive ⁴ The hot tear resistance property (tear strength) determination is conducted for peel adhesion of a sample to another sample of the same material. A description may be found in ASTM D4393 except that a sample width of 2.5 cm is used and a clear Mylar plastic film window of a 5 mm width is inserted between the two test samples. It is an interfacial adhesion measurement (pulling force expressed in N/mm units) between two layers of the same tested compound which have been co-cured together with the Mylar film window therebetween. The purpose of the Mylar film window is to delimit the width of the pealed area. ⁵ Standard wire and textile cord adhesion tests (SWAT) were conducted by embedding a single cord in the respective rubber compositions with an embedment length of 10mm. The rubber articles were then cured as indicated. The cord in these rubber compositions were then subjected to a pull-out test, according to ASTM Standard D2229-73 with a pulling speed of 12.5 mm/min. ⁶ Flex testing done according to ASTM D813, DIN 53522 which measures the propagation of a crack in a notched sample under flexure with time. | | | | | |

As seen in Tables 1 and 2, the replacement of cobalt with a tin(II) carboxylate salt in a rubber composition results in equal or superior ultimate properties (tensile strength, elongation) in both original and aged samples. While there is a slight decrease in the measured adhesion for the samples containing the tin salt as compared with cobalt, the samples containing tin salt show improved crack resistance compared to cobalt containing samples.

While the embodiments described herein have been directed to a rubber composition and a pneumatic tire, the present invention is not so limited. The rubber composition may also be used in various other articles of manufacture, including but not limited to power transmission belts, hoses, tracks, tires, air sleeves, and conveyor belts.

## Claims

1. An article of manufacture having a wire-reinforced component, the component comprising
(A) a metallic wire; and
(B) a rubber composition contacting the wire, the rubber composition comprising
(1) a diene based elastomer; and
(2) a tin acetate or tin 2-ethylhexanoate.

2. The article of manufacture of claim 1 wherein the rubber composition essentially consists of the diene based elastomer and the tin acetate or tin 2-ethylhexanoate.

3. The article of manufacture of at least one of the previous claims, wherein the tin acetate or tin 2-ethylhexanoate is present in an amount ranging from 0.25 to 2 parts by weight, per 100 parts by weight of elastomer (phr).

4. The article of manufacture of claim 3, wherein the tin acetate or tin 2-ethylhexanoate is present in an amount ranging from 0.5 to 1.5 phr.

5. The article of manufacture of at least one of the previous claims wherein the diene based elastomer is selected from the group consisting of medium vinyl polybutadiene, styrene-butadiene rubber, synthetic cis-1,4-polyisoprene, synthetic 3,4-polyisoprene, natural rubber, cis-polybutadiene, styrene-isoprene rubber, styrene-isoprene-butadiene rubber, acrylonitrile-butadiene rubber, carboxylated acrylonitrile-butadiene rubber and mixtures thereof.

6. The article of manufacture of at least one of the previous claims, wherein the amount of cobalt is less than 0.1 phr.

7. The article of manufacture of at least one of the previous claims, wherein the amount of cobalt is less than 0.01 phr.

8. The article of manufacture of at least one of the previous claims in the form of a pneumatic tire.

9. The article of manufacture of at least one of the previous claims in the form of a power transmission belt, hose, track, air sleeve, or conveyor belt.

## Patentansprüche

1. Fertigungsartikel mit einer drahtverstärkten Komponente, wobei die Komponente umfasst:
(A) einen Metalldraht; und
(B) eine mit dem Draht in Kontakt befindliche Kautschukzusammensetzung, wobei die Kautschukzusammensetzung umfasst
(1) ein dienbasiertes Elastomer; und
(2) ein Zinnacetat oder Zinn-2-ethylhexanoat.

2. Fertigungsartikel nach Anspruch 1, wobei die Kautschukzusammensetzung im Wesentlichen aus dem dienbasierten Elastomer und dem Zinnacetat oder Zinn-2-ethylhexanoat besteht.

3. Fertigungsartikel nach mindestens einem der vorhergehenden Ansprüche, wobei das Zinnacetat oder Zinn-2-ethylhexanoat in einer Menge vorhanden ist, die sich auf 0,25 bis 2 Gewichtsteile je 100 Gewichtsteile Elastomer (phr) beläuft.

4. Fertigungsartikel nach Anspruch 3, wobei das Zinnacetat oder Zinn-2-ethylhexanoat in einer Menge vorhanden ist, die sich auf 0,5 bis 1,5 phr beläuft.

5. Fertigungsartikel nach mindestens einem der vorhergehenden Ansprüche, wobei das dienbasierte Elastomer aus der Gruppe ausgewählt ist, bestehend aus Polybutadien mit mittlerem Vinylgehalt, Styrol-Butadien-Kautschuk, synthetischem cis-1,4-Polyisopren, synthetischem 3,4-Polyisopren, Naturkautschuk, cis-Polybutadien, Styrol-Isopren-Kautschuk, Styrol-Isopren-Butadien-Kautschuk, Acrylnitril-Butadien-Kautschuk, carboxyliertem Acrylnitril-Butadien-Kautschuk und Mischungen davon.

6. Fertigungsartikel nach mindestens einem der vorhergehenden Ansprüche, wobei die Menge an Kobalt weniger als 0,1 phr beträgt.

7. Fertigungsartikel nach mindestens einem der vorhergehenden Ansprüche, wobei die Menge an Kobalt weniger als 0,01 phr beträgt.

8. Fertigungsartikel nach mindestens einem der vorhergehenden Ansprüche in Form eines Luftreifens.

9. Fertigungsartikel nach mindestens einem der vorhergehenden Ansprüche in Form eines Kraftübertragungsriemens, eines Schlauchs, einer Laufkette, eines Luftbalgs oder eines Förderbandes.

## Revendications

1. Article de fabrication possédant un composant renforcé avec des fils métalliques, le composant comprenant :
(A) un fil métallique ; et
(B) une composition de caoutchouc contenant le fil métallique, la composition de caoutchouc comprenant :
(1) un élastomère à base diénique ; et
(2) un acétate d'étain ou le 2-éthylhexanoate d'étain.

2. Article de fabrication selon la revendication 1, dans lequel la composition de caoutchouc est constituée à titre essentiel de l'élastomère à base diénique et de l'acétate d'étain ou du 2-éthylhexanoate d'étain.

3. Article de fabrication selon au moins une des revendications précédentes, dans lequel l'acétate d'étain ou le 2-éthylhexanoate d'étain est présent en une quantité se situant dans la plage de 0,25 à 2 parties en poids par 100 parties en poids élastomère (phr).

4. Article de fabrication selon la revendication 3, dans lequel l'acétate d'étain ou le 2-éthylhexanoate d'étain est présent en une quantité se situant dans la plage de 0,5 à 1,5 phr.

5. Article de fabrication selon au moins une des revendications précédentes, dans lequel l'élastomère à base diénique est choisi parmi le groupe constitué par du polybutadiène possédant une teneur moyenne en groupe vinyle, du caoutchouc de styrène-butadiène, du 1,4-cis-polyisoprène synthétique, du 3,4-polyisoprène synthétique, du caoutchouc naturel, du cis-polybutadiène, du caoutchouc de styrène-isoprène, du caoutchouc de styrène-isoprène-butadiène, du caoutchouc d'acrylonitrile-butadiène, du caoutchouc d'acrylonitrile carboxylé-butadiène, ainsi que leurs mélanges.

6. Article de fabrication selon au moins une des revendications précédentes, dans lequel la quantité de cobalt est inférieure à 0,1 phr.

7. Article de fabrication selon au moins une des revendications précédentes, dans lequel la quantité de cobalt est inférieure à 0,01 phr.

8. Article de fabrication selon au moins une des revendications précédentes sous la forme d'un bandage pneumatique.

9. Article de fabrication selon au moins une des revendications précédentes sous la forme d'une courroie de transmission de puissance, d'un tuyau flexible, d'une chenille, d'un manchon pneumatique ou d'une courroie transporteuse.
